# DEMANDE DE BREVET EUROPEEN

(11) **EP 2 309 142 A1**
(43) Date de publication de la demande: **13.04.2011**
(21) Numéro de dépôt: 10290523.9
(22) Date de dépôt: 30.09.2010
(51) Int. Cl.: F16C 19/49, F16C 33/46, F16C 43/08, F16C 33/66

(54) **Procédé de montage d'un ensemble de roulement sur une piste de roulement formée autour d'un organe d'un palier**

(30) Priorité: 06.10.2009 FR 0904789
(71) Demandeur: SNR Roulements, 74000 Annecy (FR)
(72) Inventeur: Ferte, Clément, 74960 Cran Gevrier (FR)
(74) Mandataire: Sayettat, Julien Christian

(57) **Abrégé**

L'invention concerne un procédé de montage d'un ensemble de roulement (3) sur une piste de roulement (4) formée autour d'un organe (2) d'un palier, ledit ensemble comprenant une cage de rétention (6) déformable et des corps roulants (7) maintenus dans ladite cage pour permettre la rotation desdits corps sur la piste de roulement (4), ledit procédé prévoyant de déformer l'ensemble de roulement (3) pour le disposer autour de l'organe (2) puis de relâcher ladite déformation pour disposer les corps roulants (7) sur la piste de roulement (4), ledit procédé prévoyant que, préalablement à la déformation de l'ensemble de roulement (3), un lubrifiant solide (9) soit associé audit ensemble de roulement pour enrober au moins partiellement la cage (6) ainsi que les corps roulants (7) maintenus dans ladite cage.

## Description

L'invention concerne un procédé de montage d'un ensemble de roulement sur une piste de roulement formée autour d'un organe d'un palier, ainsi qu'un tel palier dans lequel est monté un ensemble de roulement. En particulier, l'invention s'applique à un palier à roulement pour le montage d'une pale à angle d'incidence variable dans un moyeu tournant d'une hélice d'aéronef.

On connaît des paliers comprenant un organe intérieur sur la périphérie duquel une piste de roulement est formée, un ensemble de roulement étant monté autour de ladite piste. En particulier, l'ensemble de roulement comprend une cage de rétention et des corps roulants maintenus dans ladite cage pour permettre la rotation desdits corps sur la piste de roulement.

Toutefois, dans certaines applications, le palier présente une géométrie qui nécessite de déformer l'ensemble de roulement pour le disposer autour de l'organe puis de relâcher ladite déformation pour disposer les corps roulants sur la piste de roulement.

En particulier, cette déformation est nécessaire lorsque l'organe présente un épaulement dont la dimension extérieure est supérieure au diamètre minimal de la piste de roulement, l'ensemble de roulement devant alors passer axialement au-delà dudit épaulement pour être disposé autour de ladite piste.

En outre, on connaît des paliers dans lesquels, pour disposer l'ensemble de roulement autour du palier, il est nécessaire de déformer ledit ensemble pour le faire passer radialement autour d'un diamètre de l'organe.

Pour permettre le montage de l'ensemble de roulement, on connaît l'utilisation d'une cage de rétention déformable élastiquement qui permet de déformer l'ensemble de roulement pour qu'il présente une dimension adaptée pour sa disposition autour de l'organe, puis son retour en position pour disposer les corps roulants sur la piste de roulement. Ensuite, l'ensemble de roulement peut être lubrifié en introduisant dans l'espace contenant ledit ensemble un lubrifiant qui est adapté pour l'application envisagée.

Toutefois, cette solution pose le problème de la cohésion de l'ensemble de roulement lors de sa déformation. En effet, chaque corps roulant est classiquement maintenu dans un logement de la cage par interaction géométrique de sorte que la déformation de la cage et donc des logements peut conduire à une chute d'un corps roulant lors du montage de l'ensemble de roulement.

Par ailleurs, notamment dans l'application particulière envisagée, le palier est soumis à des contraintes sévères en termes de lubrification. En effet, le palier étant solidaire en rotation du moyeu qui tourne à très grande vitesse, le lubrifiant a tendance à être centrifugé. Pour résoudre ce problème, on a proposé de mettre une grande quantité de lubrifiant autour de l'ensemble, ce qui va toutefois à l'encontre de la réduction de poids souhaitée dans l'industrie aéronautique.

L'invention a pour but de résoudre les problèmes de l'art antérieur en proposant notamment un procédé de montage d'un ensemble de roulement sur une piste de roulement dans lequel la cohésion de l'ensemble de roulement est garantie tout en améliorant la lubrification dudit ensemble.

A cet effet, et selon un premier aspect, l'invention propose un procédé de montage d'un ensemble de roulement sur une piste de roulement formée autour d'un organe d'un palier, ledit ensemble comprenant une cage de rétention déformable et des corps roulants maintenus dans ladite cage pour permettre la rotation desdits corps sur la piste de roulement, ledit procédé prévoyant de déformer l'ensemble de roulement pour le disposer autour de l'organe puis de relâcher ladite déformation pour disposer les corps roulants sur la piste de roulement, ledit procédé prévoyant que, préalablement à la déformation de l'ensemble de roulement, un lubrifiant solide soit associé audit ensemble de roulement pour enrober au moins partiellement la cage ainsi que les corps roulants maintenus dans ladite cage.

Selon un deuxième aspect, l'invention propose un palier à roulement comprenant un organe pourvu d'une piste de roulement autour de laquelle un ensemble de roulement est monté par mise en oeuvre d'un tel procédé, ledit ensemble de roulement comprenant une cage de rétention déformable et des corps roulants maintenus dans ladite cage en étant disposés sur la piste de roulement, ledit palier comprenant en outre un lubrifiant solide qui est associé à l'ensemble de roulement pour enrober au moins partiellement la cage ainsi que les corps roulants maintenus dans ladite cage.

Selon un troisième aspect, l'invention propose une application d'un tel palier à roulement pour le montage d'une pale à angle d'incidence variable dans un moyeu tournant d'une hélice d'aéronef.

D'autres particularités et avantages de l'invention apparaîtront dans la description qui suit, faite en référence aux figures annexées, dans lesquelles :
- la figure 1 est une vue en perspective d'un ensemble de roulement préalablement à l'association d'un lubrifiant solide selon l'invention ;
- la figure 2 est une vue en coupe transversale de l'ensemble de la figure 1 montrant l'enrobage de la cage et des corps roulants par le lubrifiant solide ;
- la figure 3 est une vue partielle en coupe longitudinale d'un palier à roulement intégrant un ensemble de roulement monté selon l'invention.

L'invention concerne un palier à roulement comprenant un organe extérieur 1 et un organe intérieur 2 formant entre eux un espace de roulement dans lequel un ensemble de roulement 3 est monté pour permettre la rotation relative desdits organes.

Pour guider la rotation relative des organes 1, 2, chacun desdits organes est pourvu d'une piste de roulement 4, un ensemble de roulement 3 étant monté dans le chemin de roulement formé entre lesdites pistes de roulement.

Un palier à roulement selon l'invention trouve notamment son application pour guider en rotation un élément oscillant, notamment pour le montage d'une pale à angle d'incidence variable dans un moyeu tournant d'une hélice d'aéronef.

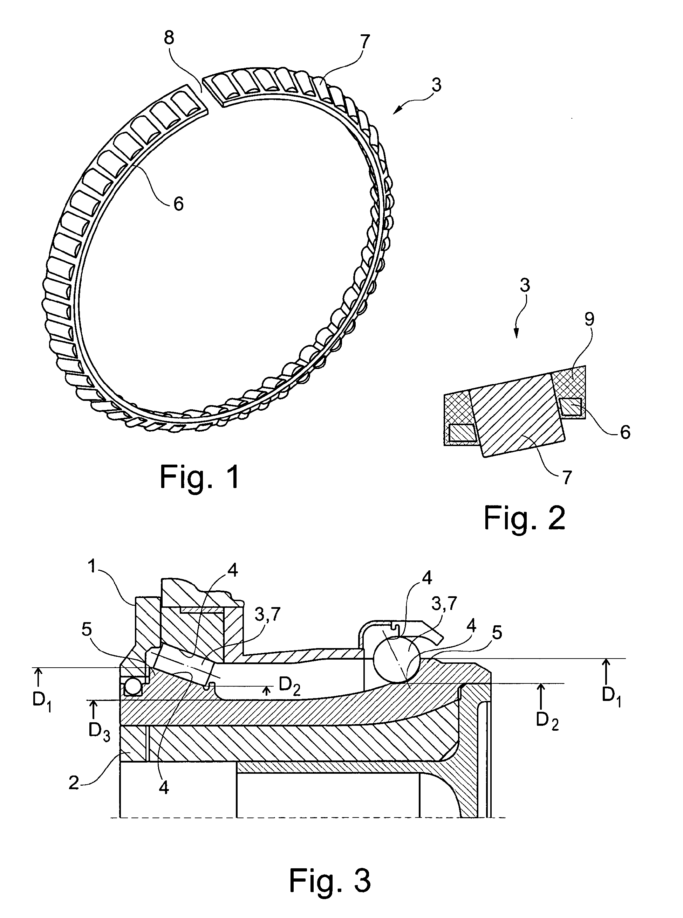

La figure 3 représente un palier pour une telle application dans lequel l'organe intérieur 2 est adapté pour être solidarisé à la pale et l'organe extérieur 1 permet le montage en rotation de l'ensemble pale - organe intérieur 2 relativement au moyeu.

En particulier, chaque organe 1, 2 présente deux pistes de roulement 4 qui sont espacées axialement pour former deux chemins de roulement, un ensemble de roulement 3 étant disposé dans chacun desdits chemins. Par ailleurs, chaque piste de roulement 4 formée autour de l'organe intérieur 2 est entourée par un épaulement 5 qui s'étend radialement au-delà de ladite piste. En particulier, chaque piste de roulement 4 de l'organe intérieur 2 est donc entourée de part et d'autre par un épaulement 5 présentant une dimension extérieure D1 qui est supérieure au diamètre minimal D2 de ladite piste de roulement.

L'ensemble de roulement 3 comprend une cage de rétention 6 et des corps roulants 7 maintenus dans ladite cage pour permettre la rotation desdits corps sur les pistes de roulement 4. En relation avec la figure 3, les corps roulants 7 peuvent être des billes pour un ensemble de roulement 3 et des rouleaux coniques pour l'autre ensemble 3, lesdits ensembles étant disposés dans un montage à contact oblique en O.

En relation avec les figures 1 et 2, on décrit ci-dessous le montage sur la piste 4 de l'organe intérieur 2 de l'ensemble de roulement 3 comprenant des rouleaux, sans que l'invention ne soit limitée à une géométrie particulière pour les corps roulants. En particulier, le montage de l'ensemble de roulement 3 comprenant les billes peut être réalisé de façon analogue.

Selon un première réalisation, pour permettre le passage axial de l'ensemble de roulement 3 au-delà de l'épaulement 5, la cage de rétention 6 est déformable entre un état stable dans lequel les corps roulants 7 sont maintenus pour pouvoir être disposés sur la piste de roulement 4 et un état déformé dans lequel ledit ensemble présente une dimension intérieure qui est supérieure à la dimension extérieure D1 de l'épaulement 5.

Selon le mode de réalisation représenté, la cage 6 présente une couronne pourvue de logements dans lesquels respectivement un corps roulant 7 est maintenu par interaction géométrique, une fente 8 étant formée dans ladite couronne. La cage 6 est réalisée dans un matériau suffisamment élastique pour permettre l'ouverture de la fente 8, c'est-à-dire l'éloignement des bords de ladite fente de sorte à augmenter le diamètre de la couronne.

Ainsi, le montage de l'ensemble de roulement 3 peut être réalisé en déformant la cage de rétention 6 par ouverture de la fente 8 puis par passage axial dudit ensemble déformé au-delà de l'épaulement 5 pour le disposer autour de la piste de roulement 4. Ensuite, le relâchement de la déformation permet le retour élastique de l'ensemble 3 en état stable afin de disposer les corps roulants 7 maintenus en rotation sur la piste de roulement 4.

Selon une deuxième réalisation, l'ensemble de roulement 3 est déformé afin que la fente 8 présente une ouverture dont la dimension est supérieure à un diamètre D3 de l'organe 2, ledit ensemble déformé étant passé radialement autour dudit diamètre D3 pour le disposer autour dudit organe. Sur la figure 3, le diamètre D3 est le diamètre extérieur minimal de l'organe 2, l'ensemble 3 disposé dans son état stable autour dudit diamètre D3 étant ensuite déplacé axialement pour disposer les corps roulants 7 sur la piste de roulement 4.

Pour garantir la cohésion de l'ensemble de roulement 3 lors de sa déformation ainsi que la lubrification nécessaire au bon fonctionnement du palier, l'invention prévoit, préalablement à ladite déformation, l'association d'un lubrifiant solide 9 audit ensemble afin d'enrober au moins partiellement la cage 6 ainsi que les corps roulants 7 maintenus dans ladite cage.

En effet, le lubrifiant solide 9 va pouvoir servir de matrice pour maintenir les corps roulants 7 dans les logements, ledit lubrifiant pouvant en outre être adapté aux contraintes de lubrification qui sont propres à l'utilisation visée. En particulier, un lubrifiant solide 9 donne satisfaction pour le guidage en rotation d'un organe oscillant, tout en limitant les risques de faux effets Brinell en fonctionnement. En outre, notamment du fait de la bonne tenue du lubrifiant solide 9 relativement à la centrifugation, la quantité et donc le poids de lubrifiant embarqué dans le palier peuvent également être mieux maitrisés, et ce sans dégrader la fiabilité de la lubrification conférée.

Selon une réalisation, l'association du lubrifiant solide 9 peut être réalisée par disposition d'une composition sur l'ensemble de roulement 3, puis chauffage de ladite composition afin de la solidifier dans ledit ensemble. En particulier, la composition est agencée pour conserver la capacité de déformation de l'ensemble de roulement 3, notamment en formant une matrice suffisamment déformable. En outre, dans le mode de réalisation représenté, on peut prévoir la réalisation dans le lubrifiant solide 9 d'une fente correspondante à la fente 8 de la couronne.

La composition de lubrifiant solide 9 peut comprendre un mélange d'une poudre de polymère thermoplastique avec une huile et/ou avec une graisse. Ainsi, par chauffage, la poudre de polymère va fusionner pour créer une matrice dans laquelle le lubrifiant est piégé. Le polymère va alors se comporter comme une éponge à l'intérieur de laquelle le lubrifiant est lié par des forces de type Van der Walls. Ensuite, au fur et à mesure de l'utilisation du palier, les liaisons retenant le lubrifiant au polymère vont être rompues ce qui aura pour effet de libérer ledit lubrifiant.

Le polymère thermoplastique utilisé peut être choisi dans le groupe comprenant les polyéthylènes haute densité. Dans le cas d'une application haute température, typiquement à une température supérieure à 135°C et notamment de l'ordre de 150°C, le polymère peut être choisi dans le groupe des polymères à haut point de fusion comprenant les polypropylènes, les polyamides, les polyfluorures de vinylidène.

Concernant le choix du lubrifiant, il est principalement dicté par les contraintes de l'application envisagée. Des huiles minérales, synthétiques ester ou perfluorées peuvent être classiquement utilisées, ainsi que des graisses à savon métallique et huile minérale, synthétique ester, perfluorée ou un mélange d'huiles minérales et perfluorées (graisses dites hybrides).

Comme représenté sur la figure 2, une bonne cohésion des corps roulants 7 dans les logements peut être obtenue en enrobant totalement la cage 6 et en associant le lubrifiant solide 9 dans les logements. En outre, le lubrifiant solide 9 se trouve alors au plus près des contacts de roulement, de sorte à optimiser la lubrification conférée.

## Revendications

1. Procédé de montage d'un ensemble de roulement (3) sur une piste de roulement (4) formée autour d'un organe (2) d'un palier, ledit ensemble comprenant une cage de rétention (6) déformable et des corps roulants (7) maintenus dans ladite cage pour permettre la rotation desdits corps sur la piste de roulement (4), ledit procédé prévoyant de déformer l'ensemble de roulement (3) pour le disposer autour de l'organe (2) puis de relâcher ladite déformation pour disposer les corps roulants (7) sur la piste de roulement (4), ledit procédé étant **caractérisé en ce que**, préalablement à la déformation de l'ensemble de roulement (3), un lubrifiant solide (9) est associé audit ensemble de roulement pour enrober au moins partiellement la cage (6) ainsi que les corps roulants (7) maintenus dans ladite cage.

2. Procédé de montage selon la revendication 1, **caractérisé en ce que** la déformation de l'ensemble de roulement (3) est réalisée par ouverture d'une fente (8) formée dans la cage (6).

3. Procédé de montage selon la revendication 1 ou 2, **caractérisé en ce que** l'organe présente un épaulement (5) dont la dimension extérieure D1 est supérieure au diamètre minimal D2 de la piste de roulement (4), l'ensemble de roulement (3) étant déformé afin qu'il présente une dimension intérieure qui est supérieure à la dimension extérieure D1 de l'épaulement (5) et ledit ensemble déformé étant passé axialement au-delà dudit épaulement pour le disposer autour de la piste de roulement (4).

4. Procédé de montage selon la revendication 2, **caractérisé en ce que** l'ensemble de roulement (3) est déformé afin que la fente (8) présente une ouverture dont la dimension est supérieure à un diamètre D3 de l'organe (2), ledit ensemble déformé étant passé radialement autour dudit diamètre D3 pour le disposer autour dudit organe.

5. Procédé de montage selon l'une quelconque des revendications 2 à 4, **caractérisé en ce qu**'il prévoit la réalisation d'une fente correspondante à la fente (8) dans le lubrifiant solide (9).

6. Procédé de montage selon l'une quelconque des revendications 1 à 5, **caractérisé en ce que** l'association du lubrifiant solide (9) est réalisée par disposition d'une composition sur l'ensemble de roulement (3), puis chauffage de ladite composition afin de la solidifier dans ledit ensemble.

7. Procédé de montage selon la revendication 6, **caractérisé en ce que** la composition comprend un mélange d'une poudre de polymère thermoplastique avec une huile et/ou avec une graisse.

8. Procédé de montage selon l'une quelconque des revendications 1 à 7 **caractérisé en ce que** la cage (6) présente une couronne pourvue de logements dans lesquels respectivement un corps roulant (7) est maintenu, le lubrifiant solide (9) étant associé dans lesdits logements.

9. Procédé de montage selon l'une quelconque des revendications 1 à 8, **caractérisé en ce que** la cage (6) est totalement enrobée par le lubrifiant solide (9).

10. Palier à roulement comprenant un organe (2) pourvu d'une piste de roulement (4) autour de laquelle un ensemble de roulement (3) est monté par mise en oeuvre d'un procédé selon l'une quelconque des revendications 1 à 9, ledit ensemble de roulement comprenant une cage de rétention (6) déformable et des corps roulants (7) maintenus dans ladite cage en étant disposés sur la piste de roulement (4), ledit palier comprenant en outre un lubrifiant solide (9) qui est associé à l'ensemble de roulement (3) pour enrober au moins partiellement la cage (6) ainsi que les corps roulants (7) maintenus dans ladite cage.

11. Palier à roulement selon la revendication 10, **caractérisé en ce que** la piste de roulement (4) est entourée de part et d'autre par un épaulement (5) dont la dimension extérieure D1 est supérieure au diamètre minimal D2 de ladite piste de roulement.

12. Application d'un palier à roulement selon la revendication 10 ou 11 pour le montage d'une pale à angle d'incidence variable dans un moyeu tournant d'une hélice d'aéronef.
